# EUROPÄISCHE PATENTANMELDUNG

(11) **EP 4 548 754 A1**
(43) Veröffentlichungstag der Anmeldung: **07.05.2025**
(21) Anmeldenummer: 24208774.0
(22) Anmeldetag: 24.10.2024
(51) Int. Cl.: A01K 1/01, A01K 29/00, G05D 1/00

(54) **REINIGUNGSVORRICHTUNG UND -VERFAHREN FÜR EINE TIERSTALLUNG**

(30) Priorität: 31.10.2023 AT 508732023
(71) Anmelder: Felder Stall GmbH & Co. KG, 6067 Absam (AT)
(72) Erfinder: Felder, Christoph, 6067 Absam (AT); Felder, Thomas, 6067 Absam (AT)
(74) Vertreter: Schwarz & Partner Patentanwälte GmbH

(57) **Zusammenfassung**

Reinigungsvorrichtung für eine Tierstallung (1), wobei die Tierstallung (1) einen Laufgang (2), einen Mistkanal (3) und einen Mistabwurf (4), welcher den Laufgang (2) vom Mistkanal (3) trennt, umfasst, wobei die Reinigungsvorrichtung umfasst: einen Reinigungsschieber (11), einen Antrieb für den Reinigungsschieber (11), zumindest einen Sensor (13) zum Erkennen eines Nutztiers im Laufgang (2), eine mit dem Sensor (13) gekoppelte Steuereinrichtung zum automatisierten Betrieb des Reinigungsschiebers (11), wobei der Reinigungsschieber (11) mittels des Antriebs entlang des Laufgangs (2) zum Mistabwurf (4) und vom Mistabwurf (4) weg bewegbar ist, wobei der Sensor (13) eine Wärmebildkamera umfasst.

## Beschreibung

Die vorliegende Erfindung betrifft eine Reinigungsvorrichtung für eine Tierstallung, wobei die Tierstallung einen Laufgang und einen Mistkanal aufweist, umfassend einen Reinigungsschieber, einen Antrieb für den Reinigungsschieber, zumindest einen Sensor zum Erkennen eines Nutztiers im Laufgang und eine mit dem Sensor gekoppelte Steuereinrichtung, wobei der Reinigungsschieber mittels des Antriebs entlang des Laufgangs zum Mistkanal hin und vom Mistkanal weg bewegbar ist. Weiters betrifft die Erfindung ein Verfahren zum Reinigen des Laufgangs einer Tierstallung, wobei der Laufgang an einem Ende von einem Mistkanal begrenzt wird. Schließlich betrifft die Erfindung eine Tierstallung mit einem Laufgang, der von einem Mistkanal begrenzt wird, wobei für den Laufgang eine Reinigungsvorrichtung vorhanden ist.

### HINTERGRUND DER ERFINDUNG

Laufgänge in Tierstallungen werden häufig mit motorisch angetriebenen Reinigungsschiebern entmistet. Solange sich kein Nutztier im Laufgang befindet, erfolgt die Entmistung automatisiert und bereitet keine Probleme. Da sich aber häufig Nutztiere in den Laufgängen aufhalten, muss bei der Reinigung darauf geachtet werden, dass die Nutztiere nicht durch den Reinigungsschieber zu Schaden kommen. Bei manchen Stallungen erfolgt die Entmistung mit Reinigungsschiebern unter Aufsicht und das Aufsichtspersonal greift bei einer möglichen Gefahr in den Entmistungsvorgang ein. Eine solche Betriebsweise der Reinigungsvorrichtung ist mit hohem Aufwand verbunden.

Bei der automatisierten Reinigung nach Stand der Technik erfolgt meist eine Widerstandsmessung am Reinigungsschieber, um festzustellen, ob sich nur Mist und Verunreinigungen im Laufgang befinden oder ob sich ein Tier darin aufhält. Trifft der Reinigungsschieber auf ein Hindernis steigt der Widerstand. Der gemessene Widerstand ist massenabhängig, sodass in der Steuerung Rückschlüsse auf die Masse des Hindernisses gezogen werden können. Je nach Widerstand kann es sich beim Hindernis um ein Tier oder um Mist handeln. Der Reinigungsschieber wird von der Steuerung gestoppt, wenn aufgrund eines großen Widerstands auf ein Nutztier rückgeschlossen wird, sodass verhindert wird, dass das Nutztier am Mistabwurf in einen Mistkanal geschoben und dabei verletzt wird.

DE 44 445 08 C1 beschreibt ein Verfahren zum Reinigen eines Laufganges einer Tierstallung, bei der ein Reinigungsschieber über dem Laufgang elektrisch gesteuert hin- und herbewegt wird, wobei bei einer Erhöhung des Verschiebewiderstands zwischen den Endlagen die Schieberbewegung gestoppt und ein Spiel von Rückwärts- und Vorwärtsbewegungen eingeleitet wird. Das in DE 44 445 08 C1 offenbarte Verfahren verringert die Unfallgefahr in Tierstallungen erheblich.

Wenngleich das in DE 44 445 08 C1 beschriebene Verfahren die Verletzungsgefahr für Nutztiere reduziert, ist das Verfahren nicht in der Lage, Jungtiere im Laufgang zu erkennen. Die Sensoren des Reinigungsschiebers können Jungtiere aufgrund der im Vergleich zu erwachsenen Nutztieren geringeren Masse nicht richtig identifizieren, sodass es vorkommen kann, dass die Nutztiere am Mistabwurf in einen Mistkanal geschoben und dabei verletzt oder getötet werden. Insbesondere bei Neugeborenen, die noch nicht auf die Bewegung und das Anstupsen des Reinigungsschiebers sensibilisiert sind, ist das Verletzungs- oder Tötungsrisiko besonders hoch.

### KURZE BESCHREIBUNG DER ERFINDUNG

Aufgabe der vorliegenden Erfindung ist daher die Bereitstellung einer Reinigungsvorrichtung für eine Tierstallung und eines Verfahrens zur Reinigung einer Tierstallung, bei denen die Gefahren des Tötens oder des Verletzens eines Jungtiers minimiert sind.

Gelöst wird diese Aufgabe durch eine
Reinigungsvorrichtung für eine Tierstallung, wobei die Tierstallung einen Laufgang, einen Mistkanal und einen Mistabwurf, welcher den Laufgang vom Mistkanal trennt, aufweist, wobei die Reinigungsvorrichtung umfasst:
einen Reinigungsschieber,
einen Antrieb für den Reinigungsschieber,
zumindest einen Sensor zum Erkennen eines Nutztiers im Laufgang,
eine mit dem Sensor gekoppelte Steuereinrichtung,
wobei der Reinigungsschieber mittels des Antriebs entlang des Laufgangs zum Mistabwurf hin und vom Mistabwurf weg bewegbar ist,
dadurch gekennzeichnet, dass der Sensor eine Wärmebildkamera umfasst.

Die Aufgabe wird außerdem gelöst durch ein
Verfahren zum Reinigen des Laufgangs einer Tierstallung mit einer Reinigungsvorrichtung der vorgenannten Art, wobei die Tierstallung einen Laufgang, einen Mistkanal und einen Mistabwurf aufweist, wobei der Mistabwurf den Laufgang vom Mistkanal trennt,
wobei der Reinigungsschieber entlang des Laufgangs bewegt wird und dabei Mist in Richtung des Mistkanals bewegt und den Mist über dem Mistabwurf in den Mistkanal schiebt,
wobei während des Bewegens des Reinigungsschiebers zumindest von einem Sicherheitsbereich des Laufgangs mittels einer Wärmebildkamera laufend Bilder aufgenommen und ausgewertet werden,
wobei der Sicherheitsbereich ein Teilabschnitt des Laufgangs ist, der vom Mistabwurf auf der einen Seite und einem vorgebbaren Abstand vom Mistabwurf auf der anderen Seite begrenzt wird,
   wobei die Bilder der Wärmebildkamera auf Nutztiere und Mist analysiert werden,
   wobei bei Erkennen eines Nutztiers die Bewegung des Reinigungsschiebers spätestens
   dann gestoppt wird, wenn sich ein Nutztier im Sicherheitsbereich befindet.

Die Erfindung beinhaltet ein Verfahren, bei dem ein Reinigungsschieber elektrisch angetrieben über den Kot- bzw. Laufgang gesteuert wird. Dabei erfasst eine Wärmebildkamera thermische Bilder vom Laufgang oder Bereichen des Laufgangs. Die Auswertung der Daten der Wärmebildkamera erlaubt es, die aktuelle Situation im Laufgang zu analysieren und geeignete Maßnahmen zu treffen. Die vorliegende Erfindung bietet dabei eine verbesserte Lösung für die Reinigung von Stallungen, insbesondere im Hinblick auf die Sicherheit von Jungtieren, die sich im Stall befinden. Durch die Integration fortschrittlicher Sensortechnologie, ermöglicht die Erfindung eine präzisere Erkennung von Tieren im Laufgang, wodurch das Risiko von Verletzungen oder Todesfällen reduziert wird. Während eine Widerstandsmessung allein aufgrund des geringen Masseunterschieds oftmals nicht zwischen Jungtieren und Mistaggregaten unterscheiden kann, lässt eine Wärmebildkamera eine solche Unterscheidung zu. Darüber hinaus ist die Wärmebildkamera tageszeitunabhängig einsetzbar.

Die Reinigungsvorrichtung kann in einer Ausführungsvariante zumindest einen weiteren Sensor aufweisen.

Der weitere Sensor kann ein Sensor zur Messung des auf den bewegten Reinigungsschieber auftretenden Widerstands sein, wobei die Steuereinrichtung in Abhängigkeit vom Widerstand bei Überschreiten eines vorgebbaren Maximalwiderstands den Antrieb des Reinigungsschiebers deaktiviert. Auf diese Weise können die Daten von Wärmebildkamera und Sensor für die Widerstandsmessung gekoppelt werden.

Der zweite Sensor kann eine Videokamera umfassen. Auf diese Weise können die Daten von Wärmebildkamera und Videokamera gekoppelt werden.

Als weitere Sensoren kommt natürlich auch eine Kombination aus Sensor für die Widerstandsmessung und Videokamera in Frage, um die Daten von Wärmebildkamera, Sensor für die Widerstandsmessung und Videokamera zu kombinieren.

In einer bevorzugten Ausführungsvariante ist ein zweiter Sensor vorgesehen sein, welcher eine Videokamera umfasst,
wobei die Auswerteeinrichtung außerdem optische Daten von Nutztieren umfasst und derart ausgebildet ist, dass sie zur Erkennung von Nutztieren von der Videokamera aufgenommene Daten mit in der programmierbaren Auswerteeinrichtung umfassten optischen Daten von Nutztieren vergleicht,
wobei die Steuereinrichtung den Antrieb des Reinigungsschiebers spätestens dann deaktiviert, wenn von der Auswerteeinrichtung ein Nutztier im Sicherheitsbereich aufgrund der Auswertung der Daten von Videokamera oder Wärmebildkamera oder Videokamera und Wärmebildkamera erkannt wird.

Die Erfindung beinhaltet in dieser Ausführungsvariante mehrere Schritte, die das Risiko von Schäden an den Tieren minimieren. Zum einen nimmt eine Videokamera laufend Bilder (Daten) des Laufgangs oder des Sicherheitsbereichs auf, während der Reinigungsschieber bewegt wird. Zum anderen erfasst die Wärmebildkamera thermische Bilder (Daten) des Bereichs. Die simultane Erfassung mittels Wärmebildkamera und Videokamera ermöglicht der Steuereinrichtung eine umfassende Auswertung der aktuellen Situation im Laufgang.

Dabei kann die Steuereinrichtung den Antrieb des Reinigungsschiebers spätestens dann deaktivieren, wenn von der Auswerteeinrichtung ein Nutztier im Sicherheitsbereich aufgrund der Auswertung nur eines Sensors (Videokamera oder Wärmebildkamera) oder beider Sensoren (Videokamera und Wärmebildkamera) erkannt wird.

Das Verfahren kann daher derart erfolgen, dass während des Bewegens des Reinigungsschiebers zumindest vom Sicherheitsbereich des Laufgangs zusätzlich mittels einer Videokamera laufend optische Daten aufgenommen und ausgewertet werden,
wobei zusätzlich die optischen Daten der Videokamera auf Nutztiere und Mist ausgewertet werden,
wobei bei Erkennen eines Nutztiers aufgrund der Auswertung der Daten der Wärmebildkamera oder der Videokamera die Bewegung des Reinigungsschiebers spätestens dann gestoppt wird, wenn sich ein Nutztier im Sicherheitsbereich befindet.

Das Verfahren kann alternativ dazu derart erfolgen, dass während des Bewegens des Reinigungsschiebers zumindest von einem Sicherheitsbereich des Laufgangs zusätzlich mittels einer Videokamera laufend optische Daten aufgenommen und ausgewertet werden,
wobei zusätzlich die optischen Daten der Videokamera auf Nutztiere und Mist ausgewertet werden,
wobei bei Erkennen eines Nutztiers aufgrund der Auswertung der Daten der Wärmebildkamera und der Videokamera die Bewegung des Reinigungsschiebers spätestens dann gestoppt wird, wenn sich ein Nutztier im Sicherheitsbereich befindet.

Die gesammelten optischen und thermischen Daten werden dann von der Auswerteeinrichtung verarbeitet, die mit spezifischen Informationen über die erwarteten Parameter von Nutztieren und Mistbeschaffenheit programmiert ist. Die Auswerteeinrichtung vergleicht die Sensordaten mit diesen vorprogrammierten Informationen. Bei einer Übereinstimmung, die darauf hindeutet, dass sich ein Tier im Gefahrenbereich befindet, wird der Antrieb des Reinigungsschiebers automatisch deaktiviert, um eine Kollision zu vermeiden.

Ein wesentliches Merkmal dieser Erfindung ist die Fähigkeit der Auswerteeinrichtung, nicht nur auf aktuelle Daten zu reagieren, sondern auch adaptiv zu lernen. Durch den Einsatz von Techniken des maschinellen Lernens kann das System Muster in den überwachten Daten erkennen, seine Datenbank von Informationen über Nutztiere aktualisieren und die Präzision seiner Reaktionen im Laufe der Zeit verbessern. Diese Fähigkeit zur Anpassung ist besonders in Umgebungen mit jungen oder neugeborenen Tieren von Vorteil, die sich möglicherweise unvorhersehbar verhalten.

Bevorzugt weist die Steuereinrichtung eine Auswerteeinrichtung auf, wobei die Auswerteeinrichtung optische Daten und thermische Daten von Nutztieren umfasst, wobei die Steuereinrichtung derart ausgebildet ist, dass sie die Sensordaten vom ersten Sensor und die Sensordaten vom zweiten Sensor miteinander vergleicht, wobei bei Übereinstimmung der in der programmierbaren Auswerteeinrichtung umfassten optischen Daten von Nutztieren und thermischen Daten von Nutztieren mit den Sensordaten vom ersten Sensor und die Sensordaten vom zweiten Sensor die Steuereinrichtung den Antrieb spätestens dann stoppt, wenn der Abstand des Reinigungsschiebers vom Abwurf in den Mistkanal einen vorgegebenen Abstand unterschritten hat.

Die Auswerteeinrichtung kann außerdem optische Daten und/oder thermische Daten von Mist umfassen, wobei die Steuereinrichtung derart ausgebildet ist, dass sie die Sensordaten vom ersten Sensor und die Sensordaten vom zweiten Sensor miteinander vergleicht, wobei bei Übereinstimmung der in der programmierbaren Auswerteeinrichtung umfassten optischen Daten von Mist und/oder thermischen Daten von Mist mit den Sensordaten vom ersten Sensor und den Sensordaten vom zweiten Sensor die Steuereinrichtung den Antrieb aktiviert bleibt.

Wird der Antrieb vor dem Nutztier sofort gestoppt, wird auch der Reinigungsbetrieb beendet. Dies stellt eine sichere Variante dar, bei der keinerlei Verletzungsrisiko für das Nutztier besteht. Diese Variante ist allerdings nachteilig, wenn sich das Nutztier am Beginn der Reinigungsstrecke befindet und so die Reinigung des Laufgangs unterbricht, obwohl kein Verletzungsrisiko durch den Mistabwurf besteht. Daher kann auch vorgesehen sein, dass die Steuereinrichtung den Antrieb erst dann stoppt, wenn der Abstand des Reinigungsschiebers vom Mistabwurf in den Mistkanal einen vorgegebenen Abstand unterschritten hat. Dabei kann das Nutztier bis kurz vor den Abwurf geschoben werden, in der Hoffnung, dass sich das Nutztier erhebt und von selbst auf die Seite geht. Sollte dies nicht passieren, stoppt der Antrieb kurz vor dem Mistabwurf.

Die Auswerteeinrichtung kann z.B. eine Einrichtung für maschinelles Sehen umfassen. Bei Einrichtungen für maschinelles Sehen werden die optischen Daten (die mittels der Videokamera erfassten Daten) und die thermischen Daten (die mittels der Wärmebildkamera erfassten Daten) mittels Bildverarbeitung analysiert. Dabei greift die Auswerteeinrichtung auf gespeicherten Daten von Nutztieren zurück. Hierfür sind optische Daten (insbesondere Erscheinungsbilder von Nutztieren) und thermische Daten von Nutztieren (insbesondere typische Oberflächentemperaturen von Nutztieren) gespeichert. Ergibt die Analyse der thermischen Daten der Wärmebildkamera eine Temperatur am aufgenommenen Gegenstand, die mit einer Oberflächentemperatur eines Nutztiers übereinstimmt und ergibt die Analyse der optischen Daten der Videokamera ein optisches Bild, das mit einem Erscheinungsbild eines Nutztiers übereinstimmt, nimmt die Steuereinrichtung eine der genannten Maßnahmen vor. Ergibt die Analyse der Daten der Wärmebildkamera eine Temperatur, die mit einer Oberflächentemperatur eines Nutztiers zwar übereinstimmt, aber ergibt die Analyse der Sensordaten der Videokamera ein Bild, das mit einem Erscheinungsbild eines Nutztiers nicht übereinstimmt, nimmt die Steuereinrichtung keine Maßnahme vor und der Antrieb bleibt aktiviert. In diesem Fall ist davon auszugehen, dass die Wärmebildkamera lediglich ein Exkrement eines Nutztiers erfasst hat, das noch die Körpertemperatur aufweist.

Weiters kann vorgesehen sein, dass die Steuereinrichtung derart ausgebildet ist, dass sie nach Deaktivierung des Antriebs des Reinigungsschiebers die Bewegungsrichtung des Reinigungsschieber ändert und den Antrieb des Reinigungsschiebers anschließend wieder aktiviert und den Reinigungsschieber in die geänderte Bewegungsrichtung bewegen lässt.

Die Steuereinrichtung kann derart ausgebildet sein, dass sie nach Überschreiten einer vorgebbaren maximalen Dauer, innerhalb welcher das Nutztier im Sicherheitsbereich erfasst wird bzw. erfassbar ist, den Antrieb aktiviert und die Bewegungsrichtung des Reinigungsschiebers ändert und in eine andere Richtung bewegen lässt, bevorzugt in die Gegenrichtung bewegen lässt.

Es kann vorgesehen sein, dass die Steuereinrichtung eine Auswerteeinrichtung aufweist, wobei die Auswerteeinrichtung derart ausgebildet ist, dass sie mit Informationen über Nutztiere, Mistbeschaffenheit und einem Gefahrenbereich im Laufkanal programmierbar ist und mit Daten des Sensors bzw. der Sensoren vergleicht, wobei bei Übereinstimmen der programmierten Informationen und der Daten des Sensors bzw. der Sensoren für ein Nutztier die Steuereinrichtung den Antrieb des Reinigungsschiebers deaktiviert, wenn sich das Nutztier im Sicherheitsbereich befindet und sich der Reinigungsschieber zum Nutztier hin bewegt.

In einer Ausführungsvariante kann vorgesehen sein, dass die Steuereinrichtung derart ausgebildet ist, dass die Deaktivierung des Antriebs so lange erfolgt, bis das Nutztier von den Sensoren nicht mehr erfasst wird. Damit bleibt die Reinigungsvorrichtung so lange deaktiviert, bis das Nutztier den Sicherheitsbereich verlässt.

In einer Ausführungsvariante ist vorgesehen, dass die Steuereinrichtung derart ausgebildet ist, dass sie nach Deaktivierung des Antriebs die Bewegungsrichtung des Reinigungsschieber ändert und diesen in eine andere Richtung bewegen lässt. Dies kann auch gekoppelt mit einer Wartezeit sein. D.h., dass die Steuereinrichtung derart ausgebildet ist, dass die Deaktivierung des Antriebs des Reinigungsschiebers so lange erfolgt, bis das Nutztier von den Sensoren nicht mehr erfasst wird. Nach Überschreiten einer vorgebbaren maximalen Dauer, innerhalb welcher das Nutztier im Sicherheitsbereich erfassbar ist, ändert die Steuerreinrichtung die Bewegungsrichtung des Reinigungsschiebers und aktiviert den Antrieb und lässt diesen in eine andere Richtung bewegen.

Auf diese Weise wird verhindert, dass der Reinigungsschieber dauerhaft in einer inaktiven Position im Laufgang stehen bleibt, sollte das Nutztier den Sicherheitsbereich nicht verlassen.

Weiters kann vorgesehen sein, dass die Steuereinrichtung derart ausgebildet ist, dass bei Überschreiten einer maximalen Dauer, innerhalb welcher sich das Nutztier im Sicherheitsbereich befindet, eine Alarmvorrichtung auslöst. Verbringt das Nutztier eine längere Zeit im Gefahrenbereich, könnte dies nämlich auf eine Verletzung des Nutztiers hindeuten. Für das Verfahren könnte ein Alarmsignal z. B. akustische Signale, optische Signale und/oder Funksignale ausgelöst werden.

Der Ort der Befestigung der Wärmebildkamera und - falls vorhanden - der Videokamera kann frei gewählt sein, solange zumindest der Sicherheitsbereich einsehbar ist. Dadurch ist gewährleistet, dass der Sicherheitsbereich überwacht wird, sobald sich der Reinigungsschieber in diesen hinein oder innerhalb davon bewegt. D.h. die Wärmebildkamera und die optionale Videokamera können am Reinigungsschieber befestigt sein. Die Wärmebildkamera und gegebenenfalls die Videokamera können aber auch an der Stallung befestigt sein. Auch ist es möglich, dass eine von Videokamera und Wärmebildkamera am Reinigungsschieber und die andere von Videokamera und Wärmebildkamera an der Stallung befestigt sind. Bevorzugt sind aber Videokamera und Wärmebildkamera an der Stallung befestigt, wobei mit diesen der Sicherheitsbereich erfassbar ist.

Die Steuereinrichtung kann eine Vorrichtung für automatisiertes maschinelles Lernen aufweisen, wobei die Vorrichtung für automatisiertes maschinelles Lernen mit den Daten von den Sensoren lernt. Als Vorrichtung für automatisiertes maschinelles Lernen kommt z.B. ein System für künstliche Intelligenz in Frage. Ein solches System ist besonders bei der Verwendung von mehreren Sensoren vorteilhaft, da so die Daten eines Sensors mit den Daten eines anderen Sensors abgeglichen werden können.

Der Reinigungsschieber kann bevorzugt ein gebundenes System sein, sodass er eine vorgegebene Fahrtrichtung und z.B. über Führungen an den Wandungen oder dem Boden der Stallung geführt wird. Der Reinigungsschieber kann aber auch ein frei bewegliches, gegebenenfalls auch autonomes Fahrzeug sein, welches die Fahrtrichtung frei ändern kann und sich frei bewegen kann.

In einem Aspekt der Erfindung ist eine Tierstallung mit einem Laufgang, einem Mistkanal und einem Mistabwurf, welcher den Laufgang vom Mistkanal trennt, wobei für den Laufgang eine Reinigungsvorrichtung der vorgenannten Art vorhanden ist. Die Tierstallung kann natürlich auch mehrere Mistkanäle, mehrere Laufgänge und mehrere Mistabwürfe aufweisen und sie kann mehrere Reinigungsvorrichtungen umfassen.

Vorteile der Erfindung sind unter anderem:
Die erhöhte Sicherheit: Die Erfindung minimiert das Risiko von Verletzungen oder Todesfällen unter den Tieren, besonders unter Jungtieren, indem sie eine präzisere und adaptivere Reaktion auf Hindernisse im Laufgang ermöglicht.

Effizienz und Zeitersparnis: Automatisierte Reinigungsvorgänge reduzieren den Bedarf an menschlichen Eingriffen, sparen Zeit und ermöglichen es den Stallbetreibern, sich auf andere Aufgaben zu konzentrieren.

Verbesserte Reinigungsqualität: Durch regelmäßige und zuverlässige Reinigungszyklen trägt das System zur Aufrechterhaltung einer hygienischen Umgebung bei, die zur Gesundheit und zum Wohlbefinden der Tiere beiträgt.

Anpassungsfähigkeit: Die Fähigkeit des Systems, von den gesammelten Daten zu lernen und seine Aktionen entsprechend anzupassen, stellt eine fortlaufende Verbesserung der Betriebsbedingungen sicher.

Reduzierte Betriebskosten: Die Automatisierung des Reinigungsprozesses kann langfristig zu Kosteneinsparungen führen, indem Arbeitskosten gesenkt und die Effizienz des Ressourceneinsatzes verbessert wird.

Insgesamt bietet die vorliegende Erfindung eine umfassende und intelligente Lösung, die sowohl die Effizienz der Stallreinigung steigert als auch einen wertvollen Beitrag zum Schutz und zur Pflege der Tiere leistet.

### DETAILLIERTE BESCHREIBUNG DER ERFINDUNG

Weitere Vorteile und Details der Erfindung werden anhand der Figuren und der dazugehörigen Figurenbeschreibung erläutert.
- Fig. 1: zeigt eine Seitenansicht einer Stallung mit Reinigungsvorrichtung
- Fig. 2: zeigt eine Draufsicht der Stallung von Fig. 1

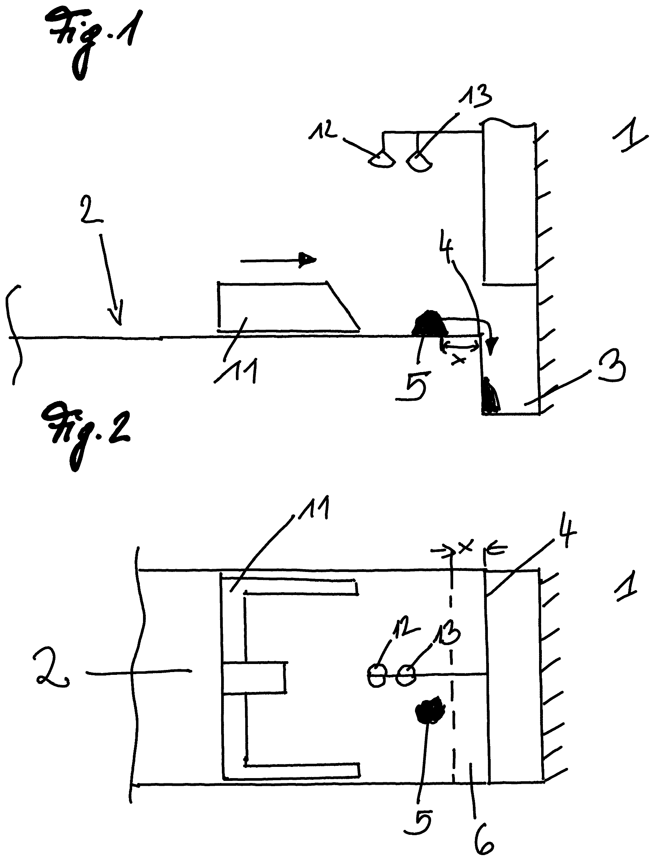

In den Fig. 1 und 2 ist eine Reinigungsvorrichtung und eine Tierstallung 1 gemäß der Erfindung gezeigt. Die Tierstallung 1 weist einen Laufgang 2, einen Mistkanal 3 und einen Mistabwurf 4 auf, welcher den Laufgang 2 vom Mistkanal 3 trennt. Weiters ist ein Sicherheitsbereich 6 gezeigt, der von einem vorgebbaren Teilabschnitt des Laufgangs 2 gebildet wird. Der Sicherheitsbereich 6 erstreckt sich vom Mistabwurf 4 auf der einen Seite und weist eine Länge x gemäß einem vorgebbaren Abstand vom Mistabwurf 4 auf, wobei er durch diese Länge x auch begrenzt ist.

Die Reinigungsvorrichtung weist einen Reinigungsschieber 11, einen Antrieb für den Reinigungsschieber 11, Sensoren 12, 13 zum Erkennen eines Nutztiers im Laufgang 2, und eine mit den Sensoren 12, 13 gekoppelte Steuereinrichtung auf. Der Reinigungsschieber 11 wird mittels eines nicht gezeigten Antriebs entlang des Laufgangs 2 zum Mistkanal 3 hin (Pfeilrichtung) und vom Mistkanal 4 wegbewegt. Im gezeigten Ausführungsbeispiel ist der Reinigungsschieber 11 ein gebundenes System, das über eine (nicht gezeigte) Führung entlang des Laufgangs 2 hin und her bewegt werden kann.

Der Sensor 13 umfasst eine Wärmebildkamera. Die Steuereinrichtung weist eine Auswerteeinrichtung auf, wobei die Auswerteeinrichtung thermische Daten von Nutztieren, wie die Körperoberflächentemperatur der Nutztiere, aufweist. Bei erwachsenen Rindern beträgt die Körperkerntemperatur etwa 38 bis 39,4 °C, bei Kälbern ist diese Temperatur ähnlich. Die Oberflächentemperaturen sind in der Regel etwas niedriger, wobei diese auch Jahreszeitabhängig und Gesundheitszustandsabhängig leicht variieren können. Als Grenzwert für die Auswerteeinrichtung kann z.B. ein Wert von >32 °C als indikativ für ein Rind gewählt werden.

Die Auswerteeinrichtung kann die von der Wärmebildkamera aufgenommenen thermischen Daten auswerten und mit in der Auswerteeinrichtung umfassten thermischen Daten von Nutztieren vergleichen. Dadurch ist die Erkennung von Nutztieren über die Wärmebildkamera möglich.

Die Steuereinrichtung deaktiviert den Antrieb des Reinigungsschiebers 11 spätestens dann, wenn von der Auswerteeinrichtung ein Nutztier im Sicherheitsbereich 6 erkannt wird und sich der Reinigungsschieber 11 im Sicherheitsbereich 6 befindet. Selbstverständlich kann der Antrieb des Reinigungsschiebers 11 auch schon vorher deaktiviert werden, wenn sich das Nutztier im Sicherheitsbereich 6 befindet, aber sich der Reinigungsschiebers 11 noch nicht dort befindet.

Im gezeigten Beispiel ist ein zweiter Sensor 12 vorgesehen, welcher eine Videokamera umfasst. Die Auswerteeinrichtung umfasst in diesem Fall außerdem optische Daten von Nutztieren und von Mist. Die Auswerteeinrichtung vergleicht zur Erkennung von Nutztieren die von der Videokamera aufgenommenen optischen Daten mit den in der Auswerteeinrichtung umfassten optischen Daten von Nutztieren. Die Steuereinrichtung deaktiviert den Antrieb des Reinigungsschiebers 11 spätestens dann, wenn von der Auswerteeinrichtung ein Nutztier im Sicherheitsbereich 6 aufgrund der Auswertung der Daten von Videokamera oder Wärmebildkamera oder Videokamera und Wärmebildkamera erkannt wird.

Selbstverständlich kann auch in diesem Fall der Antrieb des Reinigungsschiebers 11 auch schon vorher deaktiviert werden, wenn sich das Nutztier im Sicherheitsbereich 6 befindet, aber sich der Reinigungsschiebers 11 noch nicht dort befindet.

Die Auswerteeinrichtung umfasst optische Daten wie das Aussehen, die Gestalt und die Farbe von Nutztieren.

Bei zwei oder mehr Sensoren ist die Steuereinrichtung in der Lage, die Sensordaten vom ersten Sensor 12 und die Sensordaten vom zweiten Sensor 13 miteinander zu vergleichen. Bei Übereinstimmung der in der programmierbaren Auswerteeinrichtung umfassten optischen und thermischen Daten vom Nutztier mit den gespeicherten Sensordaten von den beiden Sensoren 12, 13 greift die Steuereinrichtung in den Antrieb ein und deaktiviert ihn sofort oder sie deaktiviert ihn, wenn der Abstand des Reinigungsschiebers 11 vom Abwurf 4 in den Mistkanal 3 den vorgegebenen Abstand mit Länge x unterschritten hat, d. h. sich das Nutztier im Sicherheitsbereich 6 befindet.

Die Steuereinrichtung ist derart ausgebildet ist, dass sie nach Deaktivierung des Antriebs die Bewegungsrichtung des Reinigungsschiebers 11 ändern kann und den Antrieb anschließend wieder aktiviert und diesen in die gegensätzliche Bewegungsrichtung bewegen lässt. Auch ist es möglich, dass die Reinigungsvorrichtung 10 so lange wartet, bis das Nutztier von den Sensoren 12, 13 nicht mehr erfasst wird und dann die Reinigung in der ursprünglichen Bewegungsrichtung fortsetzt.

Sollte sich das Nutztier nicht aus dem Laufgang 2 wegbewegen und weiterhin von den Sensoren 12, 13 erfasst werden, kann die Bewegungsrichtung des Reinigungsschiebers 11 nach einer gewissen Zeit geändert werden und der Reinigungsschieber 11 in die gegengesetzte Richtung bewegt werden.

Sollte sich das Nutztier in einem Abstand vom Abwurf 4 in den Mistkanal 3 befinden, der geringer als der vorgegebene Abstand von Länge x ist, kann ein Alarmsignal ausgelöst werden.

Der Sensor 12 mit Videokamera und der Sensor 13 mit Wärmebildkamera sind im Ausführungsbeispiel an der Stallung 1 befestigt.

Die Steuerung weist eine Vorrichtung für automatisiertes maschinelles Lernen auf, welche mit den Daten von den Sensoren 12, 13 selbständig lernt und die Unterscheidung zwischen Mist und Nutztier verbessert. Eine solche Vorrichtung kann z.B. das kommerziell erhältliche Programm "Machine Vision" ^{™} umfassen.

Im Zusammenhang mit Stallungen ist zwar z.B. aus WO 2015/115889 A1 die Verwendung von optischen oder thermischen Sensoren bekannt. Allerdings werden diese nicht für den Tierschutz, sondern zum Umfahren eines Nutztiers im Liegebereich einer Stallung verwendet. Der Liegebereich einer Stallung ist dem Reinigungsschieber 11 gemäß der Erfindung aber gar nicht zugänglich.

## Patentansprüche

1. Reinigungsvorrichtung für eine Tierstallung (1), wobei die Tierstallung (1) einen Laufgang (2), einen Mistkanal (3) und einen Mistabwurf (4), welcher den Laufgang (2) vom Mistkanal (3) trennt, umfasst,
wobei die Reinigungsvorrichtung umfasst:
einen Reinigungsschieber (11),
einen Antrieb für den Reinigungsschieber (11),
zumindest einen Sensor (13) zum Erkennen eines Nutztiers im Laufgang (2),
eine mit dem Sensor (13) gekoppelte Steuereinrichtung zum automatisierten Betrieb des Reinigungsschiebers (11),
wobei der Reinigungsschieber (11) mittels des Antriebs entlang des Laufgangs (2) zum Mistabwurf (4) und vom Mistabwurf (4) weg bewegbar ist,
**dadurch gekennzeichnet, dass** der Sensor (13) eine Wärmebildkamera umfasst.

2. Reinigungsvorrichtung nach Anspruch 1, **dadurch gekennzeichnet, dass** die Steuereinrichtung eine Auswerteeinrichtung aufweist,
wobei die Auswerteeinrichtung thermische Daten von Nutztieren umfasst,
wobei die Auswerteeinrichtung derart ausgebildet ist, dass die Auswerteeinrichtung zur Erkennung von Nutztieren die von der Wärmebildkamera aufgenommenen thermischen Daten mit thermischen Daten von Nutztieren, die in der Auswerteeinrichtung umfasst sind, vergleicht,
wobei die Steuereinrichtung den Antrieb des Reinigungsschiebers (11) spätestens dann deaktiviert, wenn von der Auswerteeinrichtung ein Nutztier in einem Sicherheitsbereich (6) erkannt wird und sich der Reinigungsschieber (11) im Sicherheitsbereich (6) befindet,
wobei der Sicherheitsbereich (6) ein vorgebbarer Teilabschnitt des Laufgangs (2) ist, der vom Mistabwurf (4) begrenzt wird und eine vorgebbare Länge (x) aufweist.

3. Reinigungsvorrichtung nach Anspruch 2, **dadurch gekennzeichnet, dass** ein zweiter Sensor (12) vorgesehen ist, welcher eine Videokamera umfasst,
wobei die Auswerteeinrichtung außerdem optische Daten von Nutztieren umfasst und derart ausgebildet ist, dass sie zur Erkennung von Nutztieren von der Videokamera aufgenommene optische Daten mit in der Auswerteeinrichtung umfassten optischen Daten von Nutztieren vergleicht,
wobei die Steuereinrichtung den Antrieb des Reinigungsschiebers (11) spätestens dann deaktiviert, wenn von der Auswerteeinrichtung ein Nutztier im Sicherheitsbereich (6) aufgrund der Auswertung der Daten von Videokamera oder Wärmebildkamera oder Videokamera und Wärmebildkamera erkannt wird.

4. Reinigungsvorrichtung nach Anspruch 2 oder Anspruch 3, **dadurch gekennzeichnet, dass** die Steuereinrichtung derart ausgebildet ist, dass sie nach Deaktivierung des Antriebs des Reinigungsschiebers (11) die Bewegungsrichtung des Reinigungsschieber (11) ändert und den Antrieb des Reinigungsschiebers (11) anschließend wieder aktiviert und den Reinigungsschieber (11) in die geänderte Bewegungsrichtung bewegen lässt.

5. Reinigungsvorrichtung nach einem der Ansprüche 2 bis 4, **dadurch gekennzeichnet, dass** die Steuereinrichtung derart ausgebildet ist, dass die Deaktivierung des Antriebs so lange erfolgt, bis das Nutztier von den Sensoren (12, 13) nicht mehr erfassbar ist.

6. Reinigungsvorrichtung nach Anspruch 5, **dadurch gekennzeichnet, dass** die Steuereinrichtung derart ausgebildet ist, dass sie nach Überschreiten einer vorgebbaren maximalen Dauer, innerhalb welcher das Nutztier im Sicherheitsbereich (6) erfasst wird bzw. erfassbar ist, den Antrieb aktiviert und die Bewegungsrichtung des Reinigungsschiebers (11) ändert und in eine andere Richtung bewegen lässt.

7. Reinigungsvorrichtung nach einem der Ansprüche 2 bis 6, **dadurch gekennzeichnet, dass** die Steuereinrichtung derart ausgebildet ist, dass bei Überschreiten einer maximalen Dauer, innerhalb welcher das Nutztier im Sicherheitsbereich (6) erfasst wird bzw. erfassbar ist, eine Alarmvorrichtung auslöst.

8. Reinigungsvorrichtung nach einem der Ansprüche 1 bis 7, **dadurch gekennzeichnet, dass** die Wärmebildkamera und falls vorhanden die Videokamera an der Stallung (1) befestigt sind.

9. Reinigungsvorrichtung nach einem der Ansprüche 1 bis 8, **dadurch gekennzeichnet, dass** die Steuerung eine Vorrichtung für automatisiertes maschinelles Lernen aufweist, wobei die Vorrichtung für automatisiertes maschinelles Lernen mit den von den Sensoren (12, 13) erfassten Daten lernt.

10. Tierstallung (1), umfassend einen Laufgang (2), einen Mistkanal (3) und einen Mistabwurf (4), welcher den Laufgang (2) vom Mistkanal (3) trennt, wobei für den Laufgang (2) eine Reinigungsvorrichtung (10) nach einem der Ansprüche 1 bis 9 vorhanden ist.

11. Verfahren zum Reinigen des Laufgangs (2) einer Tierstallung (1) mit einer Reinigungsvorrichtung (10) nach einem der Ansprüche 1 bis 9, wobei die Tierstallung (1) einen Laufgang (2), einen Mistkanal (3) und einen Mistabwurf (4) aufweist, wobei der Mistabwurf (4) den Laufgang (2) vom Mistkanal (3) trennt,
wobei der Reinigungsschieber (11) entlang des Laufgangs (2) bewegt wird und dabei Mist (5) in Richtung des Mistkanals (3) bewegt und den Mist (5) über den Mistabwurf (4) in den Mistkanal (3) schiebt,
wobei während des Bewegens des Reinigungsschiebers (11) zumindest von einem Sicherheitsbereich (6) des Laufgangs (2) mittels einer Wärmebildkamera laufend thermische Daten aufgenommen und ausgewertet werden,
wobei der Sicherheitsbereich (6) ein Teilabschnitt des Laufgangs (2) ist, der vom Mistabwurf (4) begrenzt wird und vorgegebene Länge (x) aufweist,
wobei die Daten der Wärmebildkamera auf Nutztiere und Mist (5) analysiert werden,
wobei bei Erkennen eines Nutztiers die Bewegung des Reinigungsschiebers (11) spätestens dann gestoppt wird, wenn sich ein Nutztier im Sicherheitsbereich (6) befindet.

12. Verfahren nach Anspruch 11, **dadurch gekennzeichnet, dass** während des Bewegens des Reinigungsschiebers (11) zumindest von einem Sicherheitsbereich (6) des Laufgangs (2) zusätzlich mittels einer Videokamera laufend optische Daten aufgenommen und ausgewertet werden,
wobei zusätzlich die optischen Daten der Videokamera auf Nutztiere und Mist ausgewertet werden,
wobei bei Erkennen eines Nutztiers aufgrund der Auswertung der Daten der Wärmebildkamera oder der Videokamera die Bewegung des Reinigungsschiebers (11) spätestens dann gestoppt wird, wenn sich ein Nutztier im Sicherheitsbereich (6) befindet.

13. Verfahren nach Anspruch 11, **dadurch gekennzeichnet, dass** während des Bewegens des Reinigungsschiebers (11) zumindest von einem Sicherheitsbereich (6) des Laufgangs (2) zusätzlich mittels einer Videokamera laufend optische Daten aufgenommen und ausgewertet werden,
wobei zusätzlich die Daten der Videokamera auf Nutztiere und Mist ausgewertet werden,
wobei bei Erkennen eines Nutztiers aufgrund der Auswertung der Daten der Wärmebildkamera und der Videokamera die Bewegung des Reinigungsschiebers (11) spätestens dann gestoppt wird, wenn sich ein Nutztier im Sicherheitsbereich (6) befindet.
